# FASCICULE DE BREVET EUROPEEN

(11) **EP 0 962 684 B1**
(45) Date de publication et mention de la délivrance du brevet: **04.08.2004**
(21) Numéro de dépôt: 99201519.8
(22) Date de dépôt: 14.05.1999
(51) Int. Cl.: F16K 24/04, F16K 17/36, B60K 15/035

(54) **Clapet de sécurité pour réservoir à liquide**
Sicherheitsventil für einen Flüssigkeitsbehälter
Safety valve for a liquid container

(30) Priorité: 02.06.1998 BE 9800420
(43) Date de publication de la demande: 08.12.1999
(73) Titulaire: Inergy Automotive Systems Research (SA), 1120 Bruxelles (BE)
(72) Inventeur: Ganachaud, Patrick, 53000 Laval (FR); Denis, Alain, 53000 Laval (FR)
(74) Mandataire: Decamps, Alain René François

(56) Documents cités:
- EP-A- 0 803 671
- WO-A-98/15761
- US-A- 5 638 856
- US-A- 5 678 590

## Description

La présente invention concerne un clapet de sécurité pour la mise à l'air d'un réservoir à liquide.

Les réservoirs à liquide, lorsqu'ils sont susceptibles d'être déplacés avec le liquide qu'ils contiennent doivent être équipés d'un système de ventilation qui soit sûr pour l'environnement alors que le réservoir est soumis à des sollicitations diverses : mouvements en tous sens et de toute amplitude, sollicitations thermiques, dépressions et surpressions.

Cette exigence est rencontrée dans le cas de réservoirs à carburant, en particulier lorsqu'ils sont montés sur des véhicules automobiles et qu'il est impératif d'empêcher la sortie de carburant liquide et de gérer les changements importants de pression et volume de gaz au cours du remplissage et pendant la totalité du stockage dans le réservoir.

Des solutions ont été apportées à ces problèmes depuis de nombreuses années par l'utilisation de circuits spéciaux de dégazage combinés à des clapets de mise à l'air. Dans certains dispositifs, les fonctions de dégazage au remplissage et de ventilation en cas de dépression sont assurées par un clapet complexe qui intègre un deuxième clapet à ressort disposé en série avec un premier clapet principal à flotteur, comme dans le clapet décrit au brevet des Etats-Unis n° 5518018.

On trouve également dans le brevet de Kasugai et al. (US 5,678,590) la description d'un clapet de sécurité dont le flotteur porte un joint souple qui assure à la fois l'étanchéité de la canalisation menant au canister mais aussi la fonction de dégazage. Mais un tel joint n'agit pas en cas de surpression ou de dépression à l'intérieur du réservoir. Par ailleurs le dispositif présenté par Kasugai et al. est inséré dans un circuit de mise à l'air c'est-à-dire qu'il est connecté entre autres à un canister : il n'intègre donc pas seul toutes les fonctions de mise à l'air. Il en va de même dans le brevet de Ohsaki (US 5,638,856) où le siège du joint est muni d'un retrait concave permettant d'équilibrer la pression sur les deux faces du joint et donc facilitant le mouvement de la soupape dans le cas où une surpression dans le réservoir s'opposerait à l'ouverture de la soupape.

Le document de Turpin et al. (EP-A-803 671) décrit un clapet de sécurité pour circuit de mise à l'air. Cependant ce clapet n'a pas, en tant que tel, pour fonction d'éviter le surremplissage du réservoir. Cette fonction est à remplir par un dispositif indépendant si besoin.

Ces clapets présentent cependant l'inconvénient d'être difficiles à fabriquer en raison de leur complexité et du montage à l'intérieur de ceux-ci de multiples ressorts en matériau élastique de matière différente de la matière du reste du clapet. De plus, ils sont généralement relativement encombrants, d'un fonctionnement délicat et d'un prix élevé. Enfin, ils n'intègrent pas tous les fonctionnalités d'un circuit de mise à l'air et n'en forment donc qu'un élément constitutif.

L'invention vise à fournir un clapet unique capable d'assurer l'ensemble des fonctions de sécurité décrites supra qui soit simple à fabriquer, fiable et d'un coût peu élevé.

A cet effet, l'invention concerne un clapet de sécurité pour la mise à l'air d'un réservoir à liquide comprenant des moyens pour:
a) la ventilation du réservoir, en ce compris lorsque celui-ci est incliné par rapport à la position initiale pour laquelle il a été conçu,
b) l'empêchement de l'éjection de liquide hors du réservoir en cas d'inclinaison de celui-ci ou de production de vagues de liquide à l'intérieur du réservoir,
c) la fermeture automatique du réservoir en cas de retournement de celui-ci,
d) le réglage du volume utile du réservoir et l'empêchement du remplissage du réservoir au delà d'un niveau prédéterminé,
e) le dégazage du réservoir pendant son remplissage,
ainsi qu'une soupape équipée d'au moins un joint souple,
caractérisé en ce que le joint peut se déformer et s'ouvrir en cas de différence de pression excessive entre l'intérieur du réservoir et l'extérieur et assurer la ventilation de sécurité du réservoir lorsque celui-ci présente une dépression ou une surpression dépassant un seuil donné par rapport à la pression extérieure.

Les réservoirs sur lesquels sont montés le clapet selon l'invention sont des enceintes fermées, de formes diverses, généralement étanches vis-à-vis de l'extérieur, qui peuvent être équipés de divers accessoires internes ou traversant la paroi de l'enceinte. En particulier, ils sont des réservoirs à carburant pour véhicules automobiles.

Des exemples d'accessoires internes ou traversant la paroi sont, non limitativement, les chicanes à liquide, les jauges et les capteurs de température ou de pression, les clapets de mise à l'air, les tubulures de remplissage, les conduits de prélèvement du liquide et les pompes de prélèvement.

Par clapet de sécurité, on entend désigner un clapet qui contribue à maintenir l'objet sur lequel il est monté dans un état sûr pour l'utilisateur, c'est-à-dire à l'abri de toute situation hasardeuse, en particulier les risques d'explosion, d'implosion, de combustion ou de pollution quelconques, tout en maintenant l'environnement extérieur à l'abri de toute fuite de liquide ou émanation de gaz indésirables.

Pour tendre à se prémunir de tels risques, le rôle du clapet de sécurité monté sur un réservoir est d'assurer la mise à l'air du réservoir, en d'autres termes, permettre son ouverture programmée afin de réaliser les deux fonctions distinctes de dégazage lors du remplissage du réservoir et de ventilation de celui-ci lors de l'utilisation et la consommation de son contenu.

L'opération de remplissage d'un réservoir avec un liquide s'accompagne nécessairement d'une augmentation de la pression interne au réservoir. Lorsque celui-ci comporte un circuit de dégazage, la légère surpression causée par le liquide nouvellement introduit dans le réservoir tend à s'annuler grâce à l'échappement d'un volume semblable du gaz qui occupait le réservoir. Dans le cas de liquides volatils, le gaz qui s'échappe sera un mélange plus ou moins homogène du gaz présent dans le réservoir avant le remplissage et de vapeurs provenant de la vaporisation partielle du liquide introduit.

Par ailleurs, en utilisation normale du liquide contenu dans le réservoir, le volume de ce dernier diminue à mesure que des prélèvements plus ou moins réguliers et/ou continus sont effectués. Il est donc nécessaire de prévoir et d'équiper les réservoirs de dispositifs permettant l'entrée d'air afin de compenser la perte de liquide au cours du fonctionnement et d'éviter ainsi la mise en dépression du réservoir et les dangers inhérents à cette situation.

Le clapet selon l'invention est destiné à équiper les réservoirs pouvant contenir tout liquide pouvant être stocké dans une enceinte fermée dans les conditions usuelles.

Il convient bien pour le stockage de liquides volatils à température et à pression ambiante. Des exemples de tels liquides sont les liquides organiques qui dégagent une odeur importante tels que les solvants divers comme les solvants halogénés, les alcools et les esters et les combustibles comme le kérosène, le pétrole lampant ou de chauffage, l'essence ou le gasoil ainsi que le fuel lourd. En particulier on utilise avantageusement le clapet selon l'invention dans les réservoirs de stockage des liquides carburants tels que l'essence ou le gasoil dans les véhicules automobiles. Il convient tout particulièrement bien pour les réservoirs de stockage de gasoil dans les véhicules à moteur Diesel.

Une première fonction importante du clapet selon l'invention est de ventiler le réservoir lorsqu'il est placé dans la position pour laquelle il a été conçu ou lorsqu'il est incliné par rapport à cette position.

Par incliné, on désigne l'état du réservoir lorsqu'il est soumis à des mouvements de faible amplitude résultant de l'utilisation du réservoir et du liquide contenu compatibles avec l'absence d'écoulement de liquide par gravité hors du réservoir via le clapet.

Afin de réaliser cette fonction, le clapet selon l'invention devra comprendre des moyens pour assurer cette ventilation. Tous les moyens permettant d'assurer cette fonction dans des conditions favorables à la sécurité de l'utilisateur peuvent convenir.

Comme exemple de tels moyens, on peut citer le clapet à flotteur dont le flotteur est solidaire d'une soupape en communication avec l'extérieur et dont la soupape reste ouverte dans les conditions normales d'utilisation. Les dimensions du flotteur et de l'élément solidaire portant la soupape sont conçues pour permettre la ventilation dans les conditions normales, c'est-à-dire lorsque le réservoir est incliné ou non et que le niveau de liquide avant inclinaison ne dépasse pas un certain seuil à l'intérieur du réservoir et que l'angle d'inclinaison éventuel ne dépasse pas un angle critique.

Un moyen ayant donné de bons résultats est celui du clapet à flotteur solidaire d'une soupape qui reste ouverte lorsque le clapet se trouve en position verticale ou inclinée.

Une deuxième fonction importante du clapet de sécurité selon l'invention est d'empêcher l'éjection de liquide hors du réservoir lorsque celui-ci est incliné comme décrit supra ou qu'il y a production de vagues de liquide en son intérieur. Le terme empêcher comprend aussi, dans le cas du clapet selon l'invention, les empêchements partiels de même que les limitations à l'écoulement libre de liquide hors du réservoir.

Les vagues de liquide sont les mouvements hydrodynamiques qui prennent naissance à la surface du liquide et peuvent se propager dans toute sa masse dans le réservoir lorsque celui-ci est animé de mouvements en sens divers résultant de son utilisation.

Le clapet de sécurité selon l'invention comprend des moyens pour empêcher l'éjection de liquide en cas de trop grande inclinaison du réservoir ou en cas de production de vagues de liquide de trop grande ampleur en son intérieur.

Tous les moyens efficaces permettant d'obturer les orifices de passage du liquide vers l'extérieur en cas de trop forte inclinaison ou de vagues importantes dans le réservoir peuvent convenir.

Un exemple de tels moyens est le clapet à flotteur solidaire d'une soupape d'obturation. Le flotteur coulisse dans un fût qui peut, en variante, se prolonger sous le clapet et au sommet duquel se trouvent les ouïes de pénétration du liquide dans le clapet. Un ressort appliqué à la base du flotteur permet, selon un mode particulier de réalisation, de compenser, en tout ou en partie, les forces de frottement du flotteur lors de son coulissement sur les parois internes du fût.

Un dimensionnement judicieux du flotteur, en particulier de sa hauteur, de la soupape d'obturation ainsi que de la puissance du ressort éventuel, permet de régler avec précision l'angle d'inclinaison à partir duquel un réservoir rempli à son niveau maximum donne lieu à la fermeture du clapet et à l'isolement du contenu du réservoir. De même, un dimensionnement soigné de la hauteur du prolongement du fût sous le clapet permet d'agir sur la sensibilité de la fermeture du clapet à l'énergie d'une vague donnée de liquide dans le réservoir.

Un moyen qui a donné de bons résultats est un clapet à flotteur, coulissant dans un fût, solidaire d'une soupape capable d'obturer le conduit de passage des gaz. Le flotteur repose en outre sur une bille dense qui vient se loger dans un puits tronconique renversé lorsque l'ensemble clapet - réservoir est dans une position non inclinée. Lorsque l'inclinaison dépasse un certain angle, qui est fonction de la masse de la bille, de l'angle des parois latérales du puits ainsi que du poids du flotteur et des forces de frottement de celui-ci dans le fût, la bille s'échappe du puits et vient soulever le flotteur et commander la fermeture de la soupape.

Une autre fonction importante du clapet selon l'invention réside dans sa faculté de se fermer automatiquement dès que le réservoir amorce un retournement (fonction connue sous le vocable "Roll-Over-Valve", en abrégé ROV, en langue anglaise). Par retournement, on désigne un mouvement d'amplitude suffisante pour que le niveau de liquide dans le réservoir puisse atteindre le clapet sous l'effet de la seule gravité. En particulier, ce terme désigne aussi toute situation dans laquelle le clapet se retrouve noyé dans le liquide du réservoir. Plus particulièrement encore, il désigne la situation dans laquelle le réservoir a subi une rotation de 180 ° par rapport à la position initiale pour laquelle il a été conçu.

Cette fermeture survient automatiquement, c'est-à-dire sans autre intervention extérieure au clapet, fut-elle humaine ou le fait d'un moteur ou dispositif quelconques susceptibles d'apporter de l'énergie.

Des moyens pour une fermeture automatique du clapet selon l'invention en cas de retournement du réservoir sont également présents. Tous les moyens capables de fermer et d'isoler le réservoir en cas de retournement conviennent.

Un exemple d'un tel moyen est celui réalisé par les clapets complexes comprenant un flotteur portant une soupape d'obturation et lestés au moyen d'un corps dense qui leur est solidaire, par exemple des flotteurs creux enfermant le corps dense à l'intérieur de leur paroi et un ressort contrebalançant la majeure partie du poids du corps dense lorsque le clapet est en position verticale de repos. Lorsqu'il y a retournement du réservoir et du clapet, le poids du corps dense s'additionne à la poussée du ressort pour pousser le flotteur ainsi immergé vers le siège de soupape.

Un moyen comprenant un clapet comprenant un flotteur, solidaire d'une soupape d'obturation, sous lequel est disposée une bille dense capable de pousser le flotteur sous l'effet de la gravité vers le siège de soupape en cas de retournement du clapet a donné d'excellents résultats.

Une autre fonction assurée par le clapet selon l'invention est la fixation du volume utile du réservoir et l'empêchement du remplissage du réservoir au-delà d'un volume prédéterminé lors de l'opération de remplissage (appelée aussi "Interdiction de Sur-Remplissage" ou ISR en abrégé).

Par volume utile on entend désigner le volume maximum admissible pour le liquide introduit dans le réservoir compatible avec une utilisation sûre ne donnant pas lieu à débordement ni danger ou pollution de l'extérieur.

Le clapet de sécurité selon l'invention comprend aussi des moyens pour régler le volume utile du réservoir ainsi que pour assurer la fonction ISR.

Tous les moyens sûr permettant d'assurer ces fonctions à l'aide d'un clapet unique peuvent convenir.

De préférence, on utilise un clapet qui ne nécessite la présence et le montage d'aucune canalisation de communication avec la goulotte de remplissage du réservoir. Un tel clapet comprend un flotteur portant une soupape qui se ferme une fois atteint le niveau utile de liquide dans le réservoir. Le siège de soupape est étanche aux liquides et aux gaz et peut résister à la surpression qui s'installe dans le réservoir dès la fermeture de la soupape. Ce clapet préféré est bien adapté aux réservoirs dont le remplissage se fait au moyen d'un système automatique qui coupe l'admission de liquide.

Une autre fonction importante du clapet selon l'invention est la possibilité d'effectuer un dégazage du réservoir, sur lequel il est monté, pendant le remplissage de celui-ci.

Tous les moyens aptes à permettre cette fonction peuvent être utilisés dans le clapet selon l'invention.

On peut, par exemple, utiliser un clapet à flotteur portant un élément d'obturation.

Un clapet à flotteur solidaire d'une soupape qui reste ouverte lorsque le niveau de liquide dans le réservoir n'entraîne pas le flotteur au-delà d'un certain niveau a donné d'excellents résultats.

Il est en outre intéressant, dans une autre forme de réalisation particulièrement préférée, de munir le clapet d'un fût qui se prolonge suffisamment vers le bas sous le siège du flotteur, afin d'éviter les fermetures intempestives du clapet lors de l'introduction d'un grand débit de liquide dans le réservoir et la production de vagues de grande amplitude en son intérieur. Outre son action habituelle contre l'éjection de liquide hors du réservoir lorsque celui-ci est en mouvement, un tel fût contribue aussi à assurer la ventilation permanente du réservoir durant la totalité de l'opération de remplissage.

Selon l'invention, le clapet de sécurité comprend une soupape équipée d'un joint souple.

Par soupape, on entend un dispositif de fermeture permettant d'annuler à volonté l'échange de matière entre une enceinte et son environnement extérieur.

Le joint souple qui équipe la soupape comprend tout joint déformable susceptible de pouvoir être monté sur la soupape.

Une autre fonction qui peut être intégrée au clapet de sécurité selon l'invention est celle qui assure la ventilation de sécurité du réservoir dans des situations de dépression ou de surpression excessives par rapport à la pression extérieure.

En effet, dans certaines situations, il peut se développer une dépression à l'intérieur d'un réservoir, par exemple lorsque celui-ci est abandonné fermé et que la température descend de manière notable, provoquant ainsi la contraction du liquide et, dans une plus grande mesure, du gaz présent dans le réservoir fermé. Une autre situation de dépression est celle où le réservoir est fermé et où il y a consommation rapide et continue de liquide. Une trop grande dépression à l'intérieur du réservoir pourrait conduire à certains dangers et doit être évitée par la mise en oeuvre de moyens pour ventiler le réservoir à partir d'un certain seuil de dépression.

Dans d'autres situations, par exemple en cas de stockage du réservoir plein, clapet fermé dans une atmosphère où la température augmente rapidement d'une manière importante, il peut se développer une surpression dangereuse à l'intérieur du réservoir.

Tous les moyens aptes à prémunir le réservoir de telles dépression ou surpression excessives peuvent être utilisés dans le clapet selon l'invention.

On peut, par exemple utiliser un système permettant l'introduction d'air par un orifice de passage secondaire.

On peut contrôler l'ouverture de cet orifice de passage secondaire au moyen d'un joint supplémentaire distinct de celui qui assure l'étanchéité de la soupape ou encore, en variante, au moyen d'une bille de faible masse disposée dans un puits à faible distance sous un orifice de sortie et jouant ainsi le rôle d'un dispositif anti retour pour l'air entrant dans le réservoir.

On peut aussi intégrer cette sécurité de dépression au joint souple réalisant l'étanchéité de la soupape. De préférence, on n'utilise pas d'orifice de passage secondaire distinct de l'orifice principal de ventilation, mais plutôt un système de soupape pouvant être alimentée par un faible débit d'air provenant de la partie supérieure de la tête du clapet. Cette soupape ne s'ouvre que sous l'influence d'une pression interne de tarage correspondant à la pression maximale qui soit compatible avec une utilisation sûre du réservoir.

On équipe la soupape d'au moins un joint souple qui se déforme pour déclencher l'ouverture d'un passage vers l'extérieur du réservoir lorsqu'un certain seuil de pression ou de dépression est atteint.

Le joint souple déformable comprend des lèvres qui assurent la fermeture étanche du réservoir. Ces lèvres ont une épaisseur adaptée à pouvoir se déformer sous l'influence d'une différence de pression donnée s'exerçant sur leurs faces opposées. Pour chaque joint, il existe un seuil de surpression ou de dépression pour lequel les lèvres se déforment suffisamment pour ouvrir un passage dans le siège de soupape et mettre ainsi en communication l'intérieur du réservoir avec l'extérieur.

Selon l'invention, le joint souple est capable de se déformer et de s'ouvrir dans les situations de dépression et de surpression par rapport à la pression extérieure. Des joints différents peuvent assurer la sécurité de surpression et celle de dépression.

Le même joint assure les sécurités de dépression et de surpression. Dans ce cas, il peut comprendre des lèvres se déformant sous l'influence de la dépression distinctes d'autres lèvres faisant aussi partie du même joint et qui se déforment en cas de surpression.

De préférence, le joint souple assurant les sécurités de dépression et de surpression est le même que le joint souple qui assure l'étanchéité de la soupape du clapet.

Selon une première forme de réalisation du clapet selon l'invention, le joint est monté sur une partie mobile du clapet solidaire d'un flotteur qui coulisse dans un fût.

De préférence, la partie mobile a la forme d'un pointeau portant à son extrémité qui coopère avec le siège de soupape, un joint annulaire souple présentant une lèvre de forme annulaire déformable destinée à obturer le siège de soupape. Le plus souvent, la lèvre annulaire du joint est réalisée dans une matière thermoplastique souple.

De préférence, on utilise, dans cette forme de réalisation, un joint qui assure aussi la sécurité de dépression.

De manière particulièrement préférée, ce joint assure également, en plus de son rôle d'élément d'étanchéité entre la tête du clapet et le flotteur et de sécurité de dépression, la sécurité de surpression. D'excellents résultats sont obtenus avec un joint équipé d'au moins deux lèvres distinctes, l'une d'entre elles assurant la sécurité de dépression et une autre assurant la sécurité de surpression.

Selon une deuxième forme de réalisation du clapet selon l'invention, le joint est monté sur la tête du clapet. Il se présente de préférence sous la forme d'un joint annulaire garnissant le siège de soupape et épousant la forme de la partie mobile du clapet solidaire d'un flotteur. De manière particulièrement préférée, le joint annulaire présente des lèvres déformables de forme annulaire qui permettent d'assurer l'étanchéité du réservoir par coopération avec la partie mobile du clapet solidaire d'un flotteur coulissant dans un fût.

De manière parallèle au cas du joint de la première forme de réalisation monté sur la partie mobile du clapet, dans cette deuxième forme de réalisation, le joint peut aussi assurer la fonction de sécurité de dépression. De manière préférée, il peut en plus assurer la fonction de sécurité de surpression. Il peut être équipé de lèvres distinctes qui assurent la sécurité de dépression et celle de surpression.

Une variante intéressante au clapet selon l'invention est celle d'un clapet qui comprend aussi des moyens pour éviter l'introduction d'impuretés dans le réservoir et pour limiter l'émanation d'odeurs provenant du liquide contenu dans celui-ci.

Tous les moyens capables de doter le clapet selon l'invention de propriétés anti odeurs et de protection contre les impuretés conviennent.

Parmi tous les moyens qui conviennent, on distingue ceux qui comprennent dans la tête du clapet, la réalisation d'orifices fixes qui débouchent dans un endroit protégé à l'abri des impuretés.. De préférence, ces orifices fixes sont situés dans une partie protégée du clapet dont la forme prémunit les orifices contre toute chute de matière solide ou liquide en provenance de l'extérieur du réservoir, notamment sous l'effet de la seule gravité. Ils peuvent aussi, en variante, être connectés à un conduit dont l'extrémité se situe dans une zone protégée à proximité du réservoir et à l'abri des impuretés.

Une variante intéressante comporte une tête de clapet à système d'ouverture mobile. Tous les systèmes d'ouverture mobiles susceptibles de pouvoir équiper le clapet selon l'invention conviennent.

Dans une première forme de réalisation, le système d'ouverture mobile est un couvercle de tête de clapet mobile qui peut s'ouvrir vers l'extérieur sous l'action d'un flux gazeux sortant du clapet.

Une autre forme de réalisation possible du système d'ouverture mobile comprend une tête de clapet munie d'un volet ouvrant par pivotement autour d'un axe charnière sous l'action d'un flux gazeux sortant du clapet.

Une variante au clapet selon l'invention qui est préférée, comprend des moyens pour récupérer des gouttelettes de liquide qui seraient entraînées par un courant gazeux qui sort du réservoir. Divers moyens capables d'une telle récupération sont envisageables.

On peut notamment utiliser un clapet dont la tête contient dans sa partie supérieure des moyens pour collecter le liquide entraîné par le flux gazeux. De préférence, le sommet de la tête de clapet comporte une partie basse où le liquide se concentre par gravité et où des gouttelettes se forment, croissent, se détachent et retombent dans le réservoir.

De préférence, on utilise un couvercle mobile, comme décrit supra, ayant une forme particulière permettant de collecter et de renvoyer dans le réservoir les gouttelettes de liquide qui auraient été entraînées avec le flux gazeux sortant.

Une forme de couvercle qui convient bien est celle qui comprend une surface interne creuse présentant un angle vif sur son pourtour et un cône renversé dans sa partie centrale. Il est par ailleurs avantageux que l'axe du cône soit confondu avec celui du clapet de façon à canaliser correctement le retour des gouttelettes dans le réservoir à travers l'ouverture du siège de soupape.

Une forme de réalisation préférée de la fixation du couvercle sur le clapet comprend le clippage de celui-ci dans un système d'au moins deux clips disposés sur la partie supérieure de la tête de clapet sur le pourtour de l'ouverture du siège de soupape.

Afin de ne pas endommager les clips lors du montage du réservoir dans son environnement d'utilisation ou pendant l'utilisation elle-même du réservoir, il est avantageux de les protéger en utilisant un clapet dont la tête est équipée d'au moins deux butées rigides disposées en saillie sur la tête et dont la longueur est au moins égale à celle de la hauteur des clips. En variante, il est intéressant que les butées puissent aussi servir de guides pour le mouvement du couvercle.

Une autre variante intéressante au clapet selon l'invention concerne un clapet qui comprend au moins un déflecteur apte à limiter les éjections de liquide lors du remplissage du réservoir. Ce déflecteur se présente généralement sous la forme d'une pièce faisant office de chicane au passage des gaz.

Un clapet conforme à cette variante comprend un déflecteur solidaire ou intégré à la tête du clapet.

Alternativement, un autre clapet conforme à cette variante comprend un déflecteur solidaire ou intégré au fût dans lequel coulisse le flotteur. Idéalement, le déflecteur est alors situé à l'endroit des ouïes percées dans la partie supérieure du fût pour l'évacuation des gaz.

Le clapet décrit supra répond aux objectifs énumérés, à savoir être de construction simple et assurer à lui seul l'ensemble des fonctions nécessaires à la sécurité de la fermeture d'un réservoir à liquide sans nécessiter la présence d'aucun autre dispositif coopérant et par conséquent être d'une fiabilité élevée et d'un prix de revient plus faible que les systèmes complexes connus jusqu'ici.

Un autre objet de la présente invention concerne l'utilisation du clapet décrit supra pour la mise à l'air d'un réservoir à carburant liquide dans une automobile équipée d'un moteur Diesel.

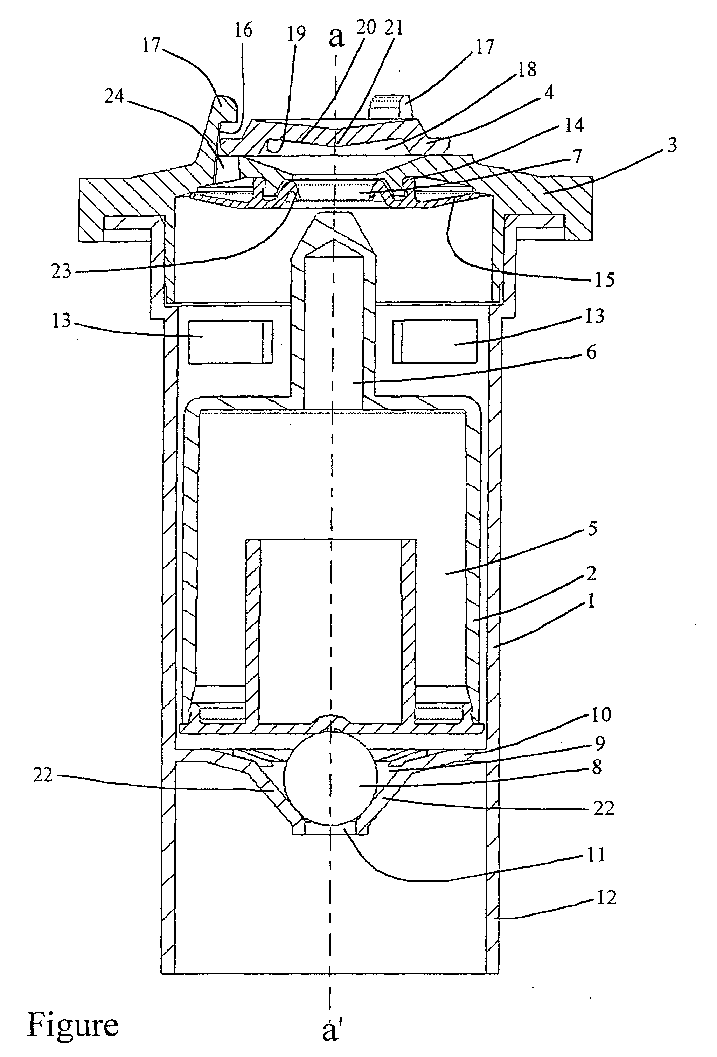

La figure jointe en annexe illustre de manière non limitative certaines variantes de l'invention qui ont été réalisées à titre d'exemple.

Elle représente schématiquement une vue en élévation d'une coupe d'un clapet conforme à l'invention.

Le clapet comprend essentiellement quatre parties distinctes, un fût (1) de forme cylindrique, plongé dans un réservoir, dans lequel coulisse une partie mobile (2) surmonté d'une tête (3), dépassant la paroi du réservoir et fermée par un couvercle (4).

La partie mobile (2) se compose d'un flotteur (5) surmonté par un pointeau (6) qui lui est solidaire et qui peut venir obturer l'orifice (7) au centre de la tête (3).

Le flotteur (5) repose sur une bille (8) en matière dense qui est libre de se mouvoir dans un puits (9) situé en position centrale d'un fond (10) solidaire des parois du fût (1). Une ouverture (11) perce la base du puits (9) et permet le passage du liquide provenant du réservoir. D'autres ouïes (non représentées) percent aussi les parois du puits (9) et le fond (10).

Le fût (1) se prolonge sous le fond (10) par une jupe (12) qui a pour but de limiter lors de la mise à l'air la sensibilité du clapet aux vagues de liquides qui peuvent parcourir le réservoir.

Des ouïes (13) percent la partie supérieure du fût (1) et servent à l'évacuation de gaz hors du réservoir ou à l'introduction d'air extérieur.

Un joint annulaire (14) muni de lèvres (15) déformables disposé sur le pourtour de l'orifice (7) coopère avec le pointeau (6) porté par le flotteur (5) pour former une soupape réglant l'ouverture et la fermeture du clapet.

Le couvercle (4) peut se soulever dans les guides (16) formés par les clips (17) disposés sur le couvercle (4) sous l'influence d'un flux de gaz s'échappant du réservoir au travers de l'orifice (7). La face intérieure du couvercle (4) présente un espace creux (18) et comporte un angle vif (19) sur son pourtour et un cône renversé (20) dans sa partie centrale, la pointe (21) du cône étant située sur l'axe (a,a') du clapet.

Le fonctionnement du clapet représenté à la figure est le suivant.

Lorsque le liquide présent dans le réservoir est en cours d'utilisation et que son niveau dans le réservoir est significativement inférieur à son niveau de sécurité maximum autorisé, il n'atteint pas la base du flotteur (5). En cas de mouvement d'inclinaison du réservoir, le clapet suit le mouvement et s'incline du même angle que le réservoir par rapport à sa position initiale. Si l'on accroît l'angle d'inclinaison du réservoir, aussi longtemps que le poids de la bille dense (8) augmenté du poids du couple flotteur (5) - pointeau (6) et des forces de frottement garde une composante tangentielle à la paroi du puits (22) située du côté de l'inclinaison inférieure à sa composante verticale, la bille (8) restera logée au fond du puits (9) et le pointeau (6) porté par le flotteur (5) maintiendra un passage entre sa partie supérieure et le siège de soupape délimité par le joint (14). Dès qu'il y aura un léger dépassement de la valeur de la composante tangentielle par rapport à celle de la composante verticale en raison de l'accroissement de l'angle d'inclinaison du réservoir, la bille (8) commencera à se déplacer sur la paroi du puits située du côté de l'inclinaison et provoquera le soulèvement du flotteur et le rapprochement du pointeau (6) du joint (14). Durant toute la période pendant laquelle la soupape reste ouverte, une ventilation du réservoir peut se produire. La situation se modifiera lorsque l'angle d'inclinaison sera suffisant pour provoquer le contact du pointeau mobile (6) avec le joint (14). A ce moment, le clapet se ferme et la ventilation du réservoir s'arrête, empêchant de ce fait l'éjection de liquide hors du réservoir incliné.

En cas de production de vagues à l'intérieur du réservoir, lorsque leur énergie est suffisante pour soulever le flotteur (5) compte tenu cependant de l'amortissement créé par la jupe (12), le clapet se ferme et évite également l'éjection de liquide hors du réservoir.

En cas de retournement du réservoir, la bille dense (8) vient appuyer de tout son poids sur le flotteur (5) et ferme rapidement le passage au liquide grâce au contact du pointeau (6) avec le joint (14).

En cas de remplissage du réservoir, lorsque le volume de sécurité maximal admissible de liquide est atteint, le flotteur (5), porté par le liquide se soulève et vient obturer la soupape grâce au contact du pointeau (6) avec le joint (14). Le volume maximal admissible peut être réglé par le dimensionnement de la hauteur du flotteur (5) et du pointeau (6) ainsi que par ajustement de la ligne de flottaison du flotteur (5).

Si l'on tente de remplir le réservoir avec du liquide au-delà du niveau maximal admissible, la pression augmente à l'intérieur du réservoir et le liquide commence à monter dans la tubulure de remplissage d'où il ne tardera pas à agir sur le dispositif d'arrêt automatique de ce système de remplissage.

Pendant toute la période de remplissage durant laquelle le flotteur (5) reste à sa position la plus basse et pendant celle où le flotteur commence à monter dans le fût (1) mais n'a pas encore atteint le niveau suffisant pour que le pointeau (6) entre en contact avec le joint (14), le dégazage du réservoir peut se poursuivre.

Lorsque le réservoir plein est laissé en position de clapet fermé et que la pression vienne à augmenter fortement à l'intérieur en raison d'une cause quelconque, par exemple en cas d'élévation importante de la température, les lèvres (23) du joint (14) en contact avec le pointeau (6) peuvent s'ouvrir et permettre une ventilation de sécurité destinée à faire tomber la pression interne sous une valeur compatible avec un comportement sûr du réservoir.

De même, dans le cas inverse où s'installerait une dépression trop importante dans le réservoir, les lèvres plates (15) du joint (14) s'ouvrent et permettent l'entrée d'air externe par l'orifice de passage secondaire (24) situé en périphérie du couvercle afin de sécuriser l'utilisation du réservoir.

## Revendications

1. Clapet de sécurité pour la mise à l'air d'un réservoir à liquide comprenant des moyens pour:
a) la ventilation du réservoir, en ce compris lorsque celui-ci est incliné par rapport à la position initiale pour laquelle il a été conçu,
b) l'empêchement de l'éjection de liquide hors du réservoir en cas d'inclinaison de celui-ci ou de production de vagues de liquide à l'intérieur du réservoir,
c) la fermeture automatique du réservoir en cas de retournement de celui-ci,
d) le réglage du volume utile du réservoir et l'empêchement du remplissage du réservoir au-delà d'un niveau prédéterminé,
e) le dégazage du réservoir pendant son remplissage,
ainsi qu'une soupape équipée d'au moins un joint souple (14),
**caractérisé en ce que** le joint peut se déformer et s'ouvrir en cas de différence de pression excessive entre l'intérieur du réservoir et l'extérieur et assurer la ventilation de sécurité du réservoir lorsque celui-ci présente une dépression ou une surpression dépassant un seuil donné par rapport à la pression extérieure.

2. Clapet de sécurité selon la revendication 1, **caractérisé en ce qu'**un joint unique assure l'étanchéité de la soupape du clapet et l'ouverture en cas de dépression et de surpression excessive à l'intérieur du réservoir par rapport à l'extérieur.

3. Clapet de sécurité selon une quelconque des revendications précédentes, **caractérisé en ce qu'**il comprend des moyens pour éviter l'introduction d'impuretés dans le réservoir et pour limiter l'émanation vers l'extérieur d'odeurs provenant du liquide contenu dans celui-ci.

4. Clapet de sécurité selon la revendication 3, **caractérisé en ce qu'**il comprend une tête (3) munie d'orifices fixes débouchant dans un endroit protégé à l'abri des impuretés.

5. Clapet de sécurité selon la revendication 3, **caractérisé en ce qu'**il comprend une tête munie d'un couvercle mobile qui peut s'ouvrir sous l'action d'un flux gazeux sortant du clapet.

6. Clapet de sécurité selon la revendication 3, **caractérisé en ce qu'**il comprend une tête munie d'un volet ouvrant par pivotement autour d'un axe charnière sous l'action d'un flux gazeux sortant du clapet.

7. Clapet de sécurité selon une quelconque des revendications précédentes, **caractérisé en ce qu'**il comprend des moyens pour récupérer des gouttelettes de liquide entraînées par un courant gazeux qui sort du réservoir.

8. Clapet de sécurité selon une quelconque des revendications précédentes, **caractérisé en ce qu'**il comprend au moins un déflecteur apte à limiter les éjections de liquide lors du remplissage du réservoir.

9. Utilisation du clapet selon une quelconque des revendications précédentes pour la mise à l'air d'un réservoir à carburant dans une automobile équipée d'un moteur Diesel.

## Patentansprüche

1. Sicherheitsventil zum Entlüften eines Flüssigkeitsbehälters, mit Mitteln zum:
a) Belüften des Behälters, einschließlich des Behälters, der bezüglich der Ausgangslage, für die er ausgebildet ist, geneigt ist,
b) Verhindern eines Austretens von Flüssigkeit aus dem Behälter im Falle der Neigung desselben oder der Erzeugung von Flüssigkeitswellen im Inneren des Behälters,
c) automatischen Schließen des Behälters im Falle eines Wendens desselben,
d) Regeln des Behälternutzvolumens und Verhindern einer Befüllung des Behälters über ein vorbestimmtes Niveau hinaus,
e) Gasablassen aus dem Behälter während seines Füllens,
sowie mit einem Verschluß, der mit zumindest einer nachgiebigen Dichtung (14) ausgebildet ist,
**dadurch gekennzeichnet, daß** die Dichtung im Falle eines exzessiven Druckunterschiedes zwischen dem Behälterinneren und dem Behälteräußeren verformbar ist und die Sicherheitsbelüftung des Behälters sicherstellt, wenn in diesem ein Unterdruck oder ein Überdruck vorhanden ist, der einen vorgegebenen Schwellenwert gegenüber den Außendruck übersteigt.

2. Sicherheitsventil nach Anspruch 1, **dadurch gekennzeichnet, daß** eine einzige Dichtung die Dichtheit des Ventilverschlusses und seines Öffnens im Falle eines exzessiven Unterdruckes oder Überdruckes im Behälterinneren gegenüber dem Behälteräußeren sicherstellt.

3. Sicherheitsventil nach einem der vorhergehenden Ansprüche, **dadurch gekennzeichnet, daß** es Mittel aufweist, um das Eindringen von Verunreinigungen in den Behälter zu vermeiden und um den Austritt von Gerüchen, die von der im Behälter enthaltenen Flüssigkeit stammen, aus dem Behälter in das Äußere zu verhindern.

4. Sicherheitsventil nach Anspruch 3, **dadurch gekennzeichnet, daß** es einen Kopf (3) aufweist, der mit fixen Öffnungen versehen ist, die an einer Stelle münden, die gegen Verunreinigungen geschützt ist.

5. Sicherheitsventil nach Anspruch 3, **dadurch gekennzeichnet, daß** es einen Kopf aufweist, der mit einem beweglichen Deckel versehen, welcher unter der Wirkung eines Gasstromes aus dem Ventil öffenbar ist.

6. Sicherheitsventil nach Anspruch 3, **dadurch gekennzeichnet, daß** es einen Kopf aufweist, der mit einer Klappe versehen ist, die durch Schwenken um eine Achse unter der Wirkung eines aus dem Ventil austretenden Gasstromes öffenbar ist.

7. Sicherheitsventil nach einem der vorhergehenden Ansprüche, **dadurch gekennzeichnet, daß** es Mittel aufweist, um Flüssigkeitstropfen aufzufangen, die von einem aus dem Behälter austretenden Gasstrom mitgerissen werden.

8. Sicherheitsventil nach einem der vorhergehenden Ansprüche, **dadurch gekennzeichnet, daß** es zumindest einen Ablenker aufweist, um das Austreten von Flüssigkeit beim Befüllen des Behälters zu begrenzen.

9. Verwendung des Ventils nach einem der vorhergehenden Ansprüche zum Entlüften eines Brennstoffbehälters in einem Automobil, das mit einem Dieselmotor ausgestattet ist.

## Claims

1. Safety valve for venting a liquid tank, comprising means for:
a) ventilating the tank, including when the latter is inclined with respect to the initial position for which it was designed,
b) preventing liquid from being ejected from the tank if the latter is inclined or if waves of liquid are produced inside the tank,
c) automatically closing the tank if the latter is rolled over,
d) adjusting the useful volume of the tank and preventing the tank from being filled beyond a predetermined level,
e) allowing gas to escape from the tank during filling thereof,
and also a valve element equipped with at least one flexible seal (14), **characterized in that** the seal can deform and open in the event of an excessive pressure difference between the inside of the tank and the outside and provide safety ventilation of the tank when the latter exhibits a depression or an overpressure that exceeds a given threshold with respect to the external pressure.

2. Safety valve according to Claim 1, **characterized in that** a single seal provides for the sealing of the valve element and for opening in the event of excessive depression and overpressure inside the tank with respect to the outside.

3. Safety valve according to either of the preceding claims, **characterized in that** it comprises means for preventing dirt from getting into the tank and for limiting the emanation of odours from the liquid contained in the tank towards the outside.

4. Safety valve according to Claim 3, **characterized in that** it comprises a head (3) equipped with stationary orifices opening into a protected place out of reach of dirt.

5. Safety valve according to Claim 3, **characterized in that** it comprises a head equipped with a mobile cover which can open under the action of a flow of gas leaving the valve.

6. Safety valve according to Claim 3, **characterized in that** it comprises a head equipped with a flap which opens by pivoting about a hinge pin under the action of a flow of gas leaving the valve.

7. Safety valve according to any one of the preceding claims, **characterized in that** it comprises means for recovering droplets of liquid entrained by a stream of gas leaving the tank.

8. Safety valve according to any one of the preceding claims, **characterized in that** it comprises at least one deflector capable of limiting liquid ejections when the tank is being filled.

9. Use of the valve according to any one of the preceding claims for venting a fuel tank in a motor vehicle equipped with a diesel engine.
